# EUROPEAN PATENT SPECIFICATION

(11) **EP 4 370 825 B1**
(45) Date of publication and mention of the grant of the patent: **04.06.2025**
(21) Application number: 22754585.2
(22) Date of filing: 07.07.2022
(51) Int. Cl.: F21S 8/04, F21V 3/06, F21V 7/24, F21V 29/87, F21V 3/10, F21V 15/01, F21V 17/10, F21V 17/16, F21V 17/18, F21V 29/77, F21V 31/00, F21Y 115/10

(54) **RECYCLED PLASTICS IN LED INSTALLATIONS**
REZYKLIERTE KUNSTSTOFFE IN LED-ANLAGEN
PLASTIQUES RECYCLÉS DANS DES INSTALLATIONS À DEL

(30) Priority: 13.07.2021 NO 20210899
(43) Date of publication of application: 22.05.2024
(73) Proprietor: CTM Lyng AS, 7125 Vanvikan (NO)
(72) Inventor: LILLEMO, Terje, 7540 Kläbu (NO)
(74) Representative: Onsagers AS
(86) International application number: PCT/NO2022/050168
(87) International publication number: WO 2023/287296

(56) References cited:
- EP-A1- 3 770 482
- DE-A1- 19 607 797
- TW-A- 201 405 067

## Description

The present invention belongs to the technical field of light installations, and more particularly to a downlights installation comprising plastic materials with a major content of recycled plastic material. According to another aspect, the present invention related to a method for manufacturing such downlights installations.

### Background

Light installations with continuously reduced energy consumption are of current interest. Changing the light source from light bulbs to light emitting diodes (LED) provides a significantly reduced energy consumption and along with that an improved carbon footprint of a light installation. Since further improvements of the carbon footprint by increasing the light emission efficiency of LED become smaller and smaller, other issues which take influence on the carbon footprint are under investigation. A promising initiative to improve the carbon footprint of light installation is the reduction of the carbon footprint of the involved materials. Pro-longed useful life-time of materials used in light installations as well as reuse of material components and recycling of material from used components are instrumental in order to reduce the carbon footprint of light installations.

CN 212841086 U discloses a downlight installation with a quickly detachable design, which significantly reduces the replacement of defective parts. Feasibility of reuse of substituted parts and recycling are greatly improved, thus protecting the environment by saving material. Metal screws are used for assembling different parts of the light installation. Use of recycled plastic in a downlights installation is not mentioned.

EP 0708800 B1 and US 6525158 B1 disclose stabilisation of recycled plastic materials containing styrene polymers and/or mixed polymers. The source materials for recycling occur in domestic and commercial industrial waste as well as in useful material collections. The stabilisation process comprises incorporation of heat and light stabilisers. The stabilised recycled material has good stability when exposed to heat and/or light. Use of the recycled plastic in light installations such as downlights is not mentioned.

US 5849804 discloses a process for recovering polyamide from composite articles by dissolving and precipitating the polyamide. The recycled material has good purity and stability. Use of such material in light installations such as downlights is not mentioned.

US 6794419 discloses a method of recycling moulded resin consisting mainly of a thermoplastic resin to which a rubber-like material is added. Impact strength is recovered or improved. Use of such impact strength modified material in light installations such as downlights is not mentioned.

EP 0506614 B1 discloses a process for stabilising recycled mixtures of different types of thermoplastic polymers which are recovered from domestic and commercial waste, by adding at least one sterically hindered phenol and at least one phosphite or phosphonite to the recycled mixture. Use of such impact strength modified material in light installations such as downlights is not mentioned.

WO 18182437 discloses a system for marking, identification and segregation plastic waste by applying a coating comprising fluorescent markers. Sorting and recycling of plastic material is facilitated.

EP 3770482 A1 discloses a downlight installation in which the housing parts can all be made of plastic - only the electrical contact parts and a biasing spring are made of metal. No metal screws are needed during assembling or disassembling. Use of recycled plastic in the downlight installation is not mentioned.

DE 19607797 A1 discloses a car lamp comprising different types of plastic material. The different types of plastic material are miscible with each other and can be used as recycled plastic in the manufacturing of new car lamps. The recycled material is used directly in the manufacturing process for the car lamp without adding any additives to the manufacturing process.

WO 201374729 A mentions that the outer shell of the bulb in a device with light-emitting diodes (LED) can be made of recycled plastic, new plastic or other mouldable material. No teaching is given how much recycled plastic in said outer shell of the bulb may be used without significantly reducing the useful life-time of said outer shell of the bulb in reference to an outer shell of the bulb made of virgin plastic in a device with LED.

NO 321161 B1 discusses using recycled plastic in a lighting device. No teaching is given how much recycled plastic in said lighting device may be used without significantly reducing the useful life-time of said lighting device in reference to a lighting device made of virgin plastic.

WO 2014040151 A discusses the use of recycled plastic in a device with LED. No teaching is given how much recycled plastic in said device with LED may be used without significantly reducing the useful life-time of said device with LED in reference to a device with LED made of virgin plastic.

US 2008264468 A discloses a solar concentrator unit, where an outer structure may be of recycled plastic. No teaching is given how much recycled plastic in said outer structure may be used without significantly reducing the useful life-time of said outer structure in reference to an outer structure made of virgin plastic.

EP 0523497 A describes thermoplastic materials for high-temperature-resistant lamp housings for headlights, floodlights and signal lights, as the thermoplastic material can be recycled material. No teaching is given how much recycled plastic in said lamp housing may be used without significantly reducing the useful life-time of said lamp housing in reference to a lamp housing made of virgin plastic

There is a need for light installations with reduced carbon footprint by other means then making the light source more efficient.

### Objectives

It is therefore an objective of the present invention to provide light installations which have a reduced carbon footprint.

It is a further objective to provide a method for providing light installations which have a reduced carbon footprint.

### The present invention

The above mentioned objects are achieved by a downlights installation as defined in claim 1.

According to another aspect, the present invention concerns a method as defined by claim 9. Preferred embodiments of the different aspects of the invention are disclosed by the dependent claims.

The present invention relates to a downlights installation with a reduced carbon footprint due to reuse of disassembled parts and/or material. Easiness of assembling and disassembling of the light installation is instrumental to make reuse of disassembled parts or material feasible and provide economic soundness.

A downlights installation according to the present invention comprises a light source and additional installation parts. These additional installation parts comprise recycled or reused plastic material, which is exposed to light and/or heat from the light source during operation of the downlights installation. The total of additional installation parts comprise no longitudinal metallic fastening devices, at least 60 weight % of recycled or reused plastic material in relation to the total weight of additional installation parts and at least one reversible fastening. The reversible fastening may be selected from the group consisting of quick release fastener, quarter turn joint, button push fastener, ball clamping, tongue and groove, feather and tongue, latch groove, latch lever, latch pin, snap lock, catch lock, hook-and-loop fastener, hook-and-pile fastener, touch fastener and magnetic fastener. Reversible fastenings may not comprise metal parts in order to contribute to a low carbon foot print.

Avoiding metallic parts such as longitudinal metallic fastening devices reduces the total weight of the additional installation parts. Additionally, the carbon foot print of metals is usually higher than the carbon foot print of plastic materials. These two issues emphasize the weighting of recycled or reused plastic material in the downlights installation along with the reduction of its carbon footprint.

The total extent to which the additional installation parts comprise recycled or reused plastic material is determined by two counter acting driving forces. On the one hand a total of about 100 weight % would provide a maximum of carbon foot print reduction compared with state-of-the-art additional installation parts. On the other hand, exposure of recycled or reused plastic material to light and/or heat from the light source during operation of the downlights installation involve degradation of the material, which limits the useful life time of the additional installation parts and thus increases their carbon foot print. Mitigation of degradation is feasible by stabilisation of the recycled or reused plastic material by addition of more or less known stabilisers or by coating of the recycled or reused plastic material.

Surprisingly it has been found that a comprisal of 60 weight % of recycled or reused plastic material in the additional installation parts provides a significant carbon foot print reduction compared with state-of-the-art additional installation parts. 60 weight % of recycled or reused plastic material can be achieved even if the heat dissipation device or heat sink in a downlight installation is made of a different material than plastic, for example from aluminium or recycled aluminium. As a matter of fact, the shape of the heat sink is more important for the cooling performance than the material it is made of. Selecting an appropriate geometry of the heat sink and selecting an appropriate recycled or reused plastic material in which the moulding of such a geometry is feasible can therefore increase the comprisal of recycled or reused plastic material in the additional installation parts to at least 75 weight % and preferably to about of 100 weight % and provide a maximum of carbon foot print reduction compared with state-of-the-art additional installation parts.

Waiving longitudinal metallic fastening devices such as screws, bolts and the like contributes to a reduced carbon foot print. However, the reliable connection of the different additional

installation parts has to be ensured along with the easiness of assembling and disassembling the different parts. Fastenings selected from the group consisting of tongue and groove, feather and tongue, latch groove, latch lever, latch pin, snap lock and catch lock provide the desired reliability and easiness.

However, these fastenings require a certain flexibility. Selection of recycled or reused plastic material within the present invention requires therefore that sufficient flexibility is ensured. Measuring indicative properties for flexibility of materials in question is therefore important. Destructive test methods such as elongation at break on small appropriate material samples in question may be used. Alternative non-destructive test methods such as carbonyl index may be used.

In a first embodiment, different selections of geometry and material of the heat sink may therefor lead to a comprisal of about 85 weight %, preferably about 90 weight %, more preferred about 95 weight % and in particular about 100 weight % of recycled or reused plastic material in the total of additional installation parts.

According to the invention, the selected recycled or reused plastic material has an elongation at break of at least 10 %, more preferred at least 20 % and in particular at least 50 %.

According to the invention, the selected recycled or reused plastic material is subjected for stabilisation in order to obtain a comprisal of 0.1-10 weight % of at least one impact strength modifier and at least one protective coating in the total of additional installation parts. Furthermore 0.1-10 weight % of at least one material selected from the group consisting of heat stabilizer and light stabilizer may be comprised in addition.

In another embodiment, the additional installation parts are selected from the group consisting of spring, spring cover, housing, anti-glare component, top glass, reflective cup, heat dissipation device, connector box and controlling device.

In another embodiment, the heat dissipation device comprises about 85 weight %, preferably about 90 weight %, more preferred about 95 weight % and in particular about 100 weight % of recycled or reused plastic material of its total content of plastic material.

In yet another embodiment, the downlights installation comprises more than one, preferably more than two, more preferred more than three and in particular more than four additional installation parts comprising about 100 weight % recycled plastic material.

In another embodiment, the at least one of the additional installation parts is a reused part from a different downlights installation.

According to the invention, the light source in the light installation is a light emitting diode (LED).

Below a more detailed explanation of the present invention is provided in the form of exemplary embodiments with reference to enclosed drawings.
Fig. 1 shows a draft of a downlights installation
Fig. 2 shows the elongation at break of different recycled plastic materials
Fig. 3 shows a reversible fastening
Fig. 4 shows a useful recycled or reused piece of plastic irradiated by LED
Fig. 5 shows a coated recycled or reused piece of plastic irradiated by LED
Fig. 6 shows a stabilised recycled or reused piece of plastic irradiated by LED
Fig. 7 shows a cracked and no longer useful recycled or reused piece of plastic irradiated by LED

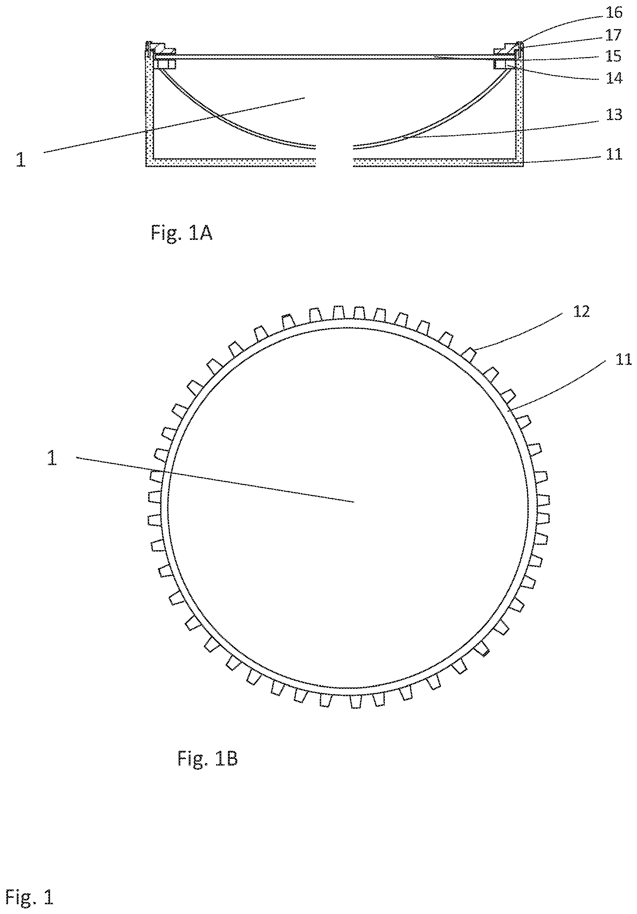

Fig. 1 shows a draft of a downlights installation in two parts. Fig 1A shows a side view of the downlights installation (1) with a central position of the light source (not shown) and with essential additional installation parts comprising lamp body (11), reflector (13), gasket (14), transparent plate (15), reversible fastening (16) and connecting ring (17). A number of 4 to 8 reversible fastenings will be arranged around periphery of connecting ring (not shown). Instead of reversible fastenings (16), the connecting ring (17) and the lamp body (11) may be provided with threads for mutual attachment. Fig 1B shows a top view of the downlights installation (1) with a light source (not shown), lamp body (11) and cooling ribs (12) belonging to the heat dissipation device.

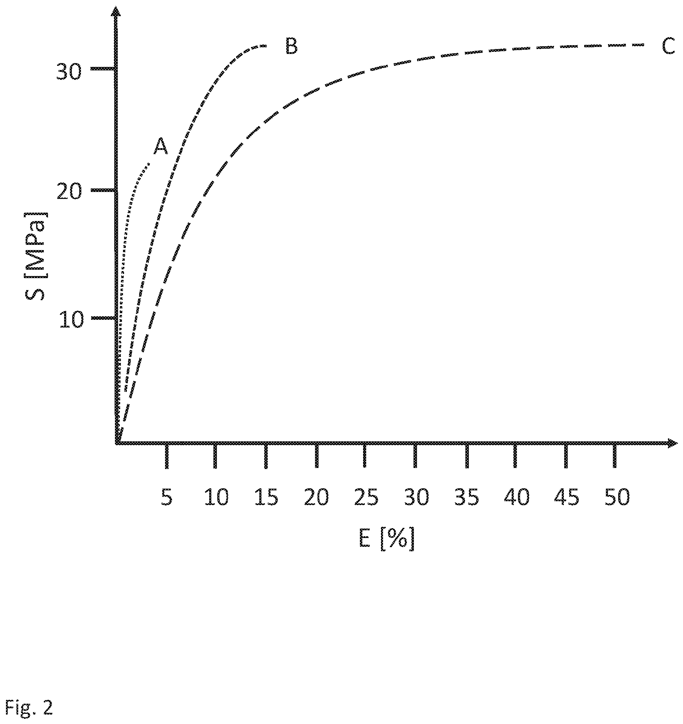

Fig. 2 shows elongation at break (E) in [%] versus strain (S) in [MPa] as typically obtained by tensile testing of three different recycled or reused plastic materials A, B, C. Material A has an elongation at break of less than 5% and will very likely fail when used in downlights installations according to the present invention. Material B could be used in downlights installations according to the present invention, but should be preferable be up-graded by using at least one material selected from the group consisting of heat stabiliser, light stabiliser, impact strength modifier and protective coating. Material C can be used as such, however a protective coating might be applied due to esthetical reasons.

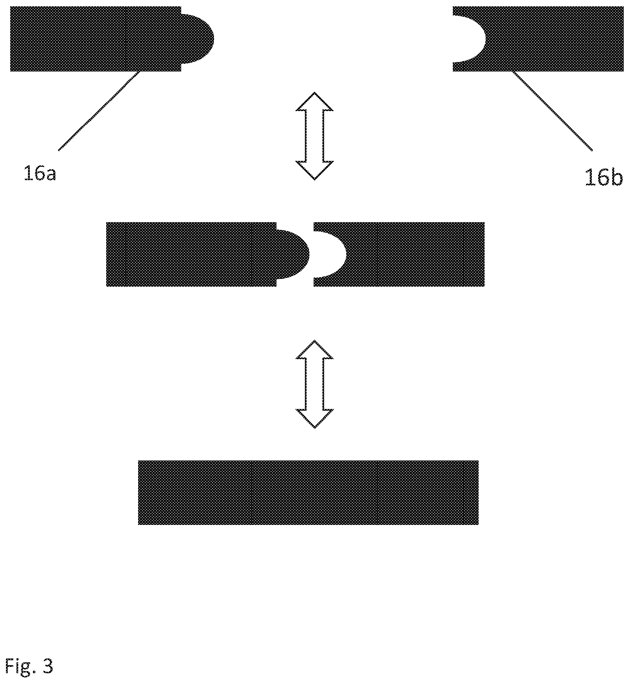

Fig. 3 shows a reversible fastening (16a, 16b). The fastening can be easily closed or opened, which facilitates assembly and disassembly of downlights installations according to the present invention.

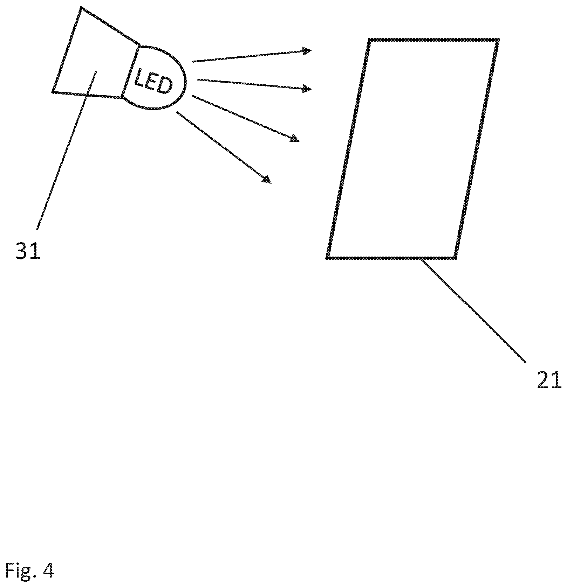

Fig. 4 shows a piece of recycled or reused plastic (21) having good resistance to degradation when exposed to light and/or heat from the light source (31).

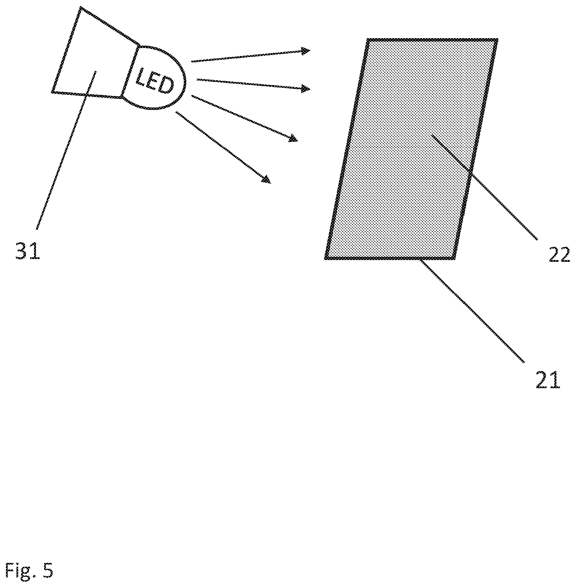

Fig. 5 shows a piece of recycled or reused plastic (21) covered by a protective coating (22). The piece of recycled or reused plastic (21) has good resistance to degradation when exposed to light and/or heat from the light source (31).

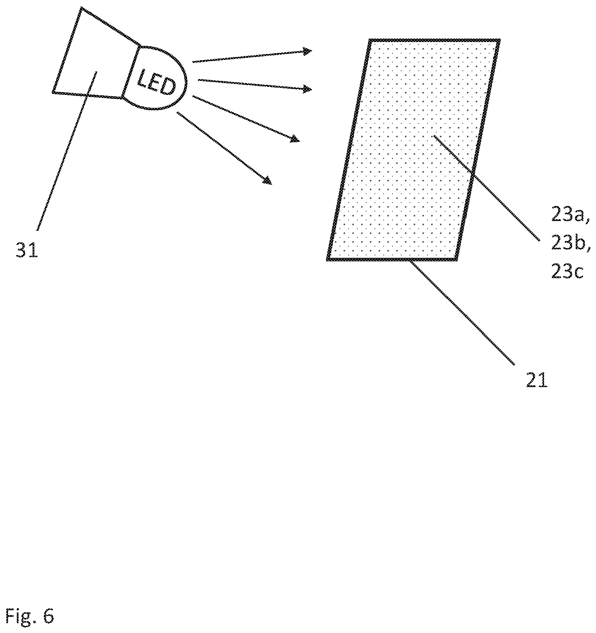

Fig. 6 shows a piece of recycled or reused plastic (21) comprising using at least one material selected from the group consisting of heat stabiliser (23a), light stabiliser (23b), impact strength modifier (23c). The piece of recycled or reused plastic (21) has good resistance to degradation when exposed to light and/or heat from the light source (31).

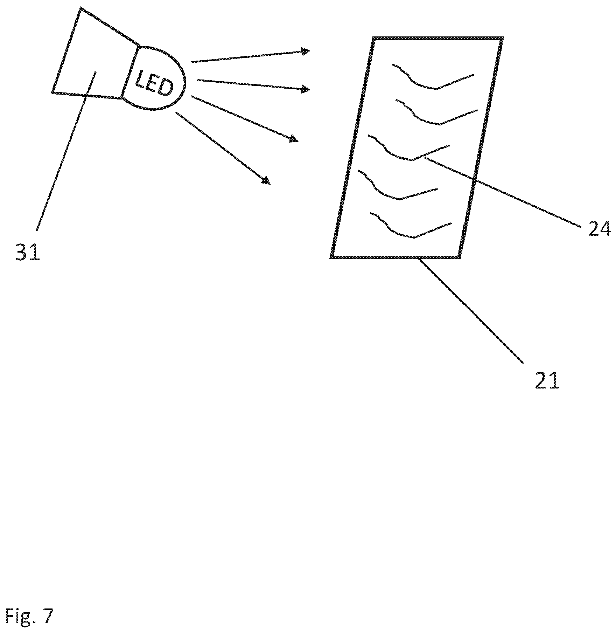

Fig. 7 shows a piece of recycled or reused plastic (21) having bad resistance to degradation when exposed to light and/or heat from the light source (31). The piece of recycled or reused plastic (21) shows several cracks (24). Recycled or reused plastic (21) with such a bad resistance to degradation will very likely fail when used in light installations according to the present invention.

## Claims

1. Downlights installation (1) comprising a light emitting diode (LED) light source (31) and additional installation parts (11, 12, 13, 14, 15, 16, 17), said additional installation parts (11, 12, 13, 14, 15, 16, 17) comprising recycled or reused plastic (21) material, said recycled or reused plastic (21) material being exposed to light and/or heat from the light source (31) during operation of the downlights installation (1),
**characterized in that** the total of additional installation parts (11, 12, 13, 14, 15, 16, 17) comprises
a. no longitudinal metallic fastening devices
b. at least 60 weight % of recycled or reused plastic (21) material
c. at least one reversible fastening (16),
wherein the elongation at break of the recycled or reused plastic (21) material is at least 10 % and wherein the total of additional installation parts (11, 12, 13, 14, 15, 16, 17) comprises 0.1-10 weight % of at least one impact strength modifier (23c) and at least one protective coating (22) and wherein 0.1-10 weight % of at least one material selected from the group consisting of heat stabiliser (23a) and light stabiliser (23b) may be comprised in addition.

2. Downlights installation (1) as claimed in claim 1, wherein the reversible fastening (16) is selected from the group consisting of quick release fastener, quarter turn joint, button push fastener, ball clamping, tongue and groove, feather and tongue, latch groove, latch lever, latch pin, snap lock, catch lock, hook-and-loop fastener, hook-and-pile fastener, touch fastener and magnetic fastener.

3. Downlights installation (1) as claimed in claim 1 or 2, wherein the total of additional installation parts (11, 12, 13, 14, 15, 16, 17) comprises about 85 weight %, preferably about 90 weight %, more preferred about 95 weight % and in particular about 100 weight % of recycled or reused plastic (21) material.

4. Downlights installation (1) as claimed in any of the preceding claims, wherein the elongation at break of the recycled or reused plastic (21) material is at least 20 % and in particular at least 50 %.

5. Downlights installation (1) as claimed in any of the preceding claims, wherein the additional installation parts (11, 12, 13, 14, 15, 16, 17) are selected from the group consisting of spring, spring cover, housing, anti-glare component, top glass, reflective cup, heat dissipation device, connector box and controlling device.

6. Downlights installation (1) as claimed in claim 5, wherein the heat dissipation device comprises about 85 weight %, preferably about 90 weight %, more preferred about 95 weight % and in particular about 100 weight % of recycled or reused plastic (21) material of its total content of plastic material.

7. Downlights installation (1) as claimed in any of the preceding claims, wherein the downlights installation (1) comprises more than one, preferably more than two, more preferred more than three and in particular more than four additional installation parts (11, 12, 13, 14, 15, 16, 17) comprising about 100 weight % of recycled plastic (21) material.

8. Downlights installation (1) as claimed in any of the preceding claims, wherein at least one of the additional installation parts (11, 12, 13, 14, 15, 16, 17) is a reused part from a different downlights installation (1).

9. Method for manufacturing of a downlights installation (1) comprising a light emitting diode (LED) light source (31) and additional installation parts (11, 12, 13, 14, 15, 16, 17), wherein the manufacturing of at least one additional installation part (11, 12, 13, 14, 15, 16, 17) comprises to choose at least one recycled or reused plastic (21) material, said recycled or reused plastic (21) material being exposed to light and/or heat from the light source (31) during operation of the latter, **characterized in that** the additional installation parts are chosen to comprise
a. no longitudinal metallic fastening devices
b. at least 60 weight % of recycled plastic (21) material
c. at least one reversible fastening (16)
wherein the elongation at break of the recycled or reused plastic (21) material is at least 10 % and wherein the total of additional installation parts (11, 12, 13, 14, 15, 16, 17) comprises 0.1-10 weight % of at least one impact strength modifier (23c) and at least one protective coating (22) and wherein 0.1-10 weight % of at least one material selected from the group consisting of heat stabiliser (23a) and light stabiliser (23b) may be comprised in addition.

## Patentansprüche

1. Einbaustrahler-Anlage (1), umfassend eine Lichtquelle (31) mit Leuchtdiode (LED) und zusätzliche Anlagenteile (11, 12, 13, 14, 15, 16, 17), wobei die zusätzlichen Anlagenteile (11, 12, 13, 14, 15, 16, 17) Material aus rezykliertem oder wiederverwendetem Kunststoff (21) umfassen, wobei das Material aus rezykliertem oder wiederverwendetem Kunststoff (21) während des Betriebs der Einbaustrahler-Anlage (1) Licht und/oder Wärme von der Lichtquelle (31) ausgesetzt ist,
**dadurch gekennzeichnet, dass** die gesamten zusätzlichen Anlagenteile (11, 12, 13, 14, 15, 16, 17)
a. keine metallischen Längsbefestigungvorrichtungen
b. mindestens 60 Gew.- % an Material aus rezykliertem oder wiederverwendetem Kunststoff (21)
c. mindestens eine reversible Befestigung (16) umfassen,
wobei die Bruchdehnung des Materials aus rezykliertem oder wiederverwendetem Kunststoff (21) mindestens 10 % beträgt
und wobei die gesamten zusätzlichen Anlagenteile (11, 12, 13, 14, 15, 16, 17) 0,1-10 Gew.-% von mindestens einem Schlagzähmodifikator (23c) und mindestens einer Schutzbeschichtung (22) umfassen und wobei 0,1-10 Gew.- % von mindestens einem Material, das aus der Gruppe bestehend aus Wärmestabilisator (23a) und Lichtstabilisator (23b) ausgewählt ist, zusätzlich umfasst sein können.

2. Einbaustrahler-Anlage (1) nach Anspruch 1, wobei die reversible Befestigung (16) aus der Gruppe bestehend aus Schnellverschluss, Vierteldrehverbindung, Knopfdruckdübel, Kugelklemmung, Feder und Nut, Feder und Feder, Rastnut, Rasthebel, Raststift, Schnappverschluss, Rastverschluss, Klettbandverschluss, Klettverschluss, Klettverschluss und Magnetverschluss ausgewählt ist.

3. Einbaustrahler-Anlage (1) nach Anspruch 1 oder 2, wobei die gesamten zusätzlichen Anlagenteile (11, 12, 13, 14, 15, 16, 17) etwa 85 Gew.- %, vorzugsweise etwa 90 Gew.- %, weiter bevorzugt etwa 95 Gew.- % und insbesondere etwa 100 Gew.- % an Material aus rezykliertem oder wiederverwendetem Kunststoff (21) umfassen.

4. Einbaustrahler-Anlage (1) nach einem der vorhergehenden Ansprüche, wobei die Bruchdehnung des Materials aus rezykliertem oder wiederverwendetem Kunststoff (21) mindestens 20 % und insbesondere mindestens 50 % beträgt.

5. Einbaustrahler-Anlage (1) nach einem der vorhergehenden Ansprüche, wobei die zusätzlichen Anlagenteile (11, 12, 13, 14, 15, 16, 17) aus der Gruppe bestehend aus Feder, Federabdeckung, Gehäuse, Blendschutzkomponente, Oberglas, Reflexionsbecher, Wärmeableitungsvorrichtung, Verbinderkasten und Steuervorrichtung ausgewählt sind.

6. Einbaustrahler-Anlage (1) nach Anspruch 5, wobei die Wärmeableitungsvorrichtung etwa 85 Gew.- %, vorzugsweise etwa 90 Gew.- %, weiter bevorzugt etwa 95 Gew.- % und insbesondere etwa 100 Gew.- % an Material aus rezykliertem oder wiederverwendetem Kunststoff (21) ihres Gesamtgehalts an Kunststoffmaterial umfasst.

7. Einbaustrahler-Anlage (1) nach einem der vorhergehenden Ansprüche, wobei die Einbaustrahler-Anlage (1) mehr als ein, vorzugsweise mehr als zwei, weiter bevorzugt mehr als drei und insbesondere mehr als vier zusätzliche Anlagenteile (11, 12, 13, 14, 15, 16, 17) umfasst, die etwa 100 Gew.- % an Material aus rezykliertem Kunststoff (21) umfassen.

8. Einbaustrahler-Anlage (1) nach einem der vorhergehenden Ansprüche, wobei mindestens eines der zusätzlichen Anlagenteile (11, 12, 13, 14, 15, 16, 17) ein Wiederverwendungsteil einer anderen Einbaustrahler-Anlage (1) ist.

9. Verfahren zum Herstellen einer Einbaustrahler-Anlage (1), umfassend eine Lichtquelle (31) mit Leuchtdiode (LED) und zusätzliche Anlagenteile (11, 12, 13, 14, 15, 16, 17), wobei das Herstellen mindestens eines zusätzlichen Anlagenteils (11, 12, 13, 14, 15, 16, 17) die Auswahl mindestens eines Materials aus rezykliertem oder wiederverwendetem Kunststoff (21) umfasst, wobei das Material aus rezykliertem oder wiederverwendetem Kunststoff (21) während des Betriebs der Lichtquelle (31) Licht und/oder Wärme von dieser ausgesetzt ist, **dadurch gekennzeichnet, dass** die zusätzlichen Anlagenteile so ausgewählt werden, dass sie
a. keine metallischen Längsbefestigungvorrichtungen
b. mindestens 60 Gew.- % an Material aus rezykliertem Kunststoff (21)
c. mindestens eine reversible Befestigung (16) umfassen,
wobei die Bruchdehnung des Materials aus rezykliertem oder wiederverwendetem Kunststoff (21) mindestens 10 % beträgt und wobei die gesamten zusätzlichen Anlagenteile (11, 12, 13, 14, 15, 16, 17) 0,1-10 Gew.- % von mindestens einem Schlagzähmodifikator (23c) und mindestens einer Schutzbeschichtung (22) umfasst und wobei 0,1-10 Gew.- % von mindestens einem Material, das aus der Gruppe bestehend aus Wärmestabilisator (23a) und Lichtstabilisator (23b) ausgewählt ist, zusätzlich umfasst sein können.

## Revendications

1. Installation de luminaire encastré (1) comprenant une source de lumière à diode électroluminescente (DEL) (31) et des pièces d'installation supplémentaires (11, 12, 13, 14, 15, 16, 17), lesdites pièces d'installation supplémentaires (11, 12, 13, 14, 15, 16, 17) comprenant un matériau en plastique recyclé ou réutilisé (21), ledit matériau en plastique recyclé ou réutilisé (21) étant exposé à de la lumière et/ou à de la chaleur provenant de la source de lumière (31) pendant le fonctionnement de l'installation de luminaire encastré (1),
**caractérisée en ce que** le total de pièces d'installation supplémentaires (11, 12, 13, 14, 15, 15, 17) comprend
a. aucun dispositif de fixation métallique longitudinal
b. au moins 60 % en poids de matériau en plastique recyclé ou réutilisé (21)
c. au moins une fixation réversible (16),
dans laquelle l'allongement à la rupture du matériau en plastique recyclé ou réutilisé (21) est d'au moins 10 % et dans laquelle le total de pièces d'installation supplémentaires (11, 12, 13, 14, 15, 16, 17) comprend 0,1 à 10 % en poids d'au moins un modificateur de résistance aux chocs (23c) et au moins un revêtement protecteur (22) et dans laquelle 0,1 à 10 % en poids d'au moins un matériau sélectionné dans le groupe constitué d'un stabilisant thermique (23a) et d'un stabilisant de lumière (23b) peut être compris en supplément.

2. Installation de luminaire encastré (1) selon la revendication 1, dans laquelle la fixation réversible (16) est sélectionnée dans le groupe constitué par une fixation à libération rapide, un joint quart de tour, une fermeture à bouton-poussoir, un serrage à bille, une languette et une rainure, une plume et une languette, une rainure de verrouillage, un levier de verrouillage, une goupille de verrouillage, un verrou à encliquetage, un verrou à verrouillage, une fixation à crochet et boucle, une fixation à crochet et à pile, une fixation tactile et une fixation magnétique.

3. Installation de luminaire encastré (1) selon la revendication 1 ou 2, dans laquelle le total de pièces d'installation supplémentaires (11, 12, 13, 14, 15, 16, 17) comprend environ 85 % en poids, de préférence environ 90 % en poids, de manière davantage préférée environ 95 % en poids et en particulier environ 100 % en poids de matériau en plastique recyclé ou réutilisé (21).

4. Installation de luminaire encastré (1) selon l'une quelconque des revendications précédentes, dans laquelle l'allongement à la rupture du matériau en plastique recyclé ou réutilisé (21) est d'au moins 20 % et en particulier d'au moins 50 %.

5. Installation de luminaire encastré (1) selon l'une quelconque des revendications précédentes, dans laquelle les pièces d'installation supplémentaires (11, 12, 13, 14, 15, 16, 17) sont sélectionnées dans le groupe constitué d'un ressort, d'un couvercle de ressort, d'un boîtier, d'un composant antireflet, d'un verre supérieur, d'une coupelle réfléchissante, d'un dispositif de dissipation de chaleur, d'un boîtier de connecteur et d'un dispositif de commande.

6. Installation de luminaire encastré (1) selon la revendication 5, dans laquelle le dispositif de dissipation de chaleur comprend environ 85 % en poids, de préférence environ 90 % en poids, de manière davantage préférée environ 95 % en poids et en particulier environ 100 % en poids de matériau en plastique recyclé ou réutilisé (21) de sa teneur totale en matériau en plastique.

7. Installation de luminaire encastré (1) selon l'une quelconque des revendications précédentes, dans laquelle l'installation de luminaire encastré (1) comprend plus d'une, de préférence plus de deux, de manière davantage préférée plus de trois et en particulier plus de quatre pièces d'installation supplémentaires (11, 12, 13, 14, 15, 16, 17) comprenant environ 100 % en poids de matériau en plastique recyclé (21).

8. Installation de luminaire encastré (1) selon l'une quelconque des revendications précédentes, dans laquelle au moins l'une des pièces d'installation supplémentaires (11, 12, 13, 14, 15, 16, 17) est une pièce réutilisée provenant d'une installation de luminaire encastré différente (1).

9. Procédé de fabrication d'une installation de luminaire encastré (1) comprenant une source de lumière à diode électroluminescente (DEL) (31) et des pièces d'installation supplémentaires (11, 12, 13, 14, 15, 16, 17), dans lequel la fabrication d'au moins une pièce d'installation supplémentaire (11, 12, 13, 14, 15, 16, 17) comprend le choix d'au moins un matériau en plastique recyclé ou réutilisé (21), ledit matériau en plastique recyclé ou réutilisé (21) étant exposé à de la lumière et/ou à de la chaleur provenant de la source de lumière (31) pendant le fonctionnement de celle-ci, **caractérisé en ce que** les pièces d'installation supplémentaires sont sélectionnées pour comprendre
a. aucun dispositif de fixation métallique longitudinal
b. au moins 60 % en poids de matériau en plastique recyclé (21)
c. au moins une fixation réversible (16)
dans lequel l'allongement à la rupture du matériau en plastique recyclé ou réutilisé (21) est d'au moins 10 % et dans lequel le total de pièces d'installation supplémentaires (11, 12, 13, 14, 15, 16, 17) comprend 0,1 à 10 % en poids d'au moins un modificateur de résistance aux chocs (23c) et au moins un revêtement protecteur (22) et dans laquelle 0,1 à 10 % en poids d'au moins un matériau sélectionné dans le groupe constitué d'un stabilisant thermique (23a) et d'un stabilisant de lumière (23b) peut être compris en supplément.
